# EUROPÄISCHE PATENTSCHRIFT

(11) **EP 2 795 199 B1**
(45) Veröffentlichungstag und Bekanntmachung des Hinweises auf die Patenterteilung: **03.02.2016**
(21) Anmeldenummer: 12821257.8
(22) Anmeldetag: 21.12.2012
(51) Int. Cl.: F24D 19/10, F24D 11/00

(54) **WÄRMEVERSORGUNGSSYSTEM UND WÄRMEVERSORGUNGSVERFAHREN**
HEAT SUPPLY SYSTEM AND HEAT SUPPLY METHOD
SYSTÈME ET PROCÉDÉ D'ALIMENTATION THERMIQUE

(30) Priorität: 22.12.2011 DE 102011056864
(43) Veröffentlichungstag der Anmeldung: 29.10.2014
(73) Patentinhaber: AZ - Pokorny Trade S.r.o., 671 73 Tulesice (CZ)
(72) Erfinder: CHYTIL, Lubor, 742 66 Stramberk (CZ)
(74) Vertreter: Thomas, Matthias
(86) Internationale Anmeldenummer: PCT/EP2012/005338
(87) Internationale Veröffentlichungsnummer: WO 2013/091892

(56) Entgegenhaltungen:
- EP-A1- 2 151 578
- EP-A1- 2 306 096
- WO-A2-2010/094282
- GB-A- 2 457 051

## Beschreibung

Die Erfindung betrifft ein Wärmeversorgungsverfahren für ein Wärmeversorgungssystem, bei dem eine Wärmesenke in der Form eines Wärmetauschers als zentrales Element dazu dient, die verschiedenen Wärmeerzeuger, vor allem Quellen erneuerbarer Energien, mit Wärmeverbrauchern oder Wärmespeichern energetisch, jedoch nicht hydraulisch, zu verbinden. Die Erfindung betrifft weiter ein Wärmevercorgungssystem, das zur Durchführung des oben beschriebenen Wärmeversorgungsverfahrens geeignet ist.

Wärmeversorgungssysteme der oben beschriebenen Art sind an sich bekannt. Externe Wärmeerzeuger, die vornehmlich erneuerbare Energien gewinnen, sind hydraulisch mit der Wärmesenke in Form eines Wärmetauschers verbunden und liefern die gewonnenen Wärmemengen an die Wärmesenke. Quellen erneuerbarer Energien sind vor allem Solarkollektoren, Erdwärmesonden, rückgewinnbare Prozesswärme und dergleichen. Der Erzeugerkreis ist gegenüber dem Verbraucherkreis hydraulisch entkoppelt. Der Verbraucherkreis als Heizungskreis kann in direkter hydraulischer Kopplung einen Wärmeerzeuger, vornehmlich einen Heizkessel, enthalten. Die Verbraucher sind vor allem Heizkörper, Wärmetauscher von Klimaanlagen, Wärmetauscher von Swimmingpools, Heizungen von Gewächshäusern sowie Leitungskreise zur Erzeugung und/oder Speicherung von Brauchwasser. Obenstehende Aufzählungen sind lediglich beispielhaft.

Aus dem Stand der Technik ebenso bekannt sind Wärmeversorgungssysteme, die aus einem Wärmeerzeuger, vornehmlich einem Heizkessel, einer hydraulischen Weiche und wenigstens einem Versorgungskreis für Wärmeverbraucher bestehen. Solche Heizungssysteme überwiegen bei Installationen, bei denen kein Schwerpunkt auf eine vorrangige Gewinnung erneuerbarer Energien gelegt wird oder erneuerbare Energien allenfalls ergänzend in das bestehende Heizungssystem integriert werden.

Die bekannten Wärmeversorgungssysteme dieser Art verwenden eine hydraulische Weiche zum Ausgleich von Asymmetrien in den Druckverläufen innerhalb des Wärmeversorgungssystems.

Ein Vorschlag aus DE 10 2009 051 782 A1 betrifft die Zuordnung einer Steuerung zu einer solchen hydraulischen Weiche, um Wärmemengen bedarfsgerechter zwischen Wärmequellen und Wärmeverbrauchern verteilen zu können. Um eine ausgeglichene Wärmebilanz erzeugen zu können, wird die zusätzliche Anordnung eines Solarpufferspeichers vorgeschlagen, der jedoch im Hinblick auf seine technische Ausführung ein Wärmetauscher mit großem Behältervolumen sein muss. Deshalb werden aus erneuerbaren Energien gewonnene Wärmemengen nur gespeichert, aber nicht unmittelbar in den Verbraucherkreis eingespeist.

Der wesentlichste Nachteil der vorgeschlagenen Anordnung ist, dass der Solarpufferspeicher zwangsläufig eine große Trägheit aufweisen muss.

Eine ähnlich aufgebaute Anlage ist in DE 2 151 578 A1 beschrieben. Auch in diesem Fall wird ein zentraler Wärmespeicher zugleich als Wärmesenke für das gesamte Versorgungssystem vorgeschlagen. Nachteilig bleibt mithin die hohe Trägheit eines solchen Systems.

Ein weiterer Vorschlag in DE 2 151 578 A1 betrifft die Einführung einer Kommunikationsschnittstelle in ein zum Wärmeversorgungssystem gehörendes Pumpenaggregat, wobei das Pumpenaggregat mit extern angeordneten Ventilen, Pumpen oder Sensoren kommunizieren und aus den erhaltenen Kenngrößen Befehle für das Pumpenaggregat ableiten kann. Das Pumpenaggregat selbst dient allerdings nur der Ansteuerung von Teilkreisen einer Fußbodenheizung.

Die verschiedenen Wärmequellen arbeiten mit unterschiedlichen Medien und transportieren zugleich auch unterschiedliche Wärmemengen. So muss beispielsweise bei solarthermischen Kollektoren ein Medium zirkulieren, das frostgeschützt ist. Hinsichtlich der Medientemperaturen wird ein konventioneller Heizkessel Medium mit einer Grenztemperatur von max. 80° C liefern, während ein solarthermischer Kollektor gegebenenfalls über 100° C erwärmtes Medium liefert. Außerdem können auch Medien mit niedrigeren Grenztemperaturen in ein Wärmeversorgungssystem eingebunden sein, beispielsweise über eine so genannte Wärmepumpe.

In solchen Wärmeversorgungssystemen ist es unerlässlich, die in den externen Leitungskreisen vorhandenen Wärmemengen über eine so genannte Wärmesenke dem (Heiz-)Medium nutzbar zu machen.

In allen bekannten Anlagen wird als Wärmesenke eine Einrichtung eingesetzt, die einen Wärmetauscher und einen Wärmespeicher miteinander kombiniert.

In Kenntnis, dass zwischen Aufkommen an erwärmtem Medium, mithin dem Aufkommen an Wärmemengen, und dem Verbrauch an Wärmemengen ein Missverhältnis entstehen kann, werden den Wärmetauschern Speichervolumina zugeordnet, um bei Ungleichgewichten zwischen Erzeugung und Verbrauch eine Zwischenspeicherung der Wärmemengen zu ermöglichen. Nachfolgend werden solche Geräte als Kombispeicher bezeichnet.

Für bekannte Wärmeversorgungssysteme ist beispielhaft die Anlage mit der Bezeichnung CTC Eco Zenith I 555 der Firma CTC AB, 341 26 Ljungby, Schweden zu erwähnen. Dieses System hat einen Kombispeicher als Zentraleinheit, wobei der Wärmetauscher ein Spiralwärmetauscher ist, der das gesamte eingeschlossene Medium erwärmt. Die zugeführte Wärmemenge ist dabei nicht in der Lage, das gesamte gespeicherte Medium schnell zu erwärmen. Insoweit ist ein Wärmeversorgungssystem mit einer solchen Zentraleinheit ausgesprochen träge.

Einen ebensolchen Kombispeicher schlägt auch DE 20 2011 003 668 U1 vor. Bei diesem Speicher soll die die Trägheit bewirkende Schichtung von Medium mit unterschiedlichen Temperaturen dadurch ausgenutzt werden, dass, dem Bedarfsniveau angeschlossener Verbraucher entsprechend, jeweils in der Höhe Leitungsanschlüsse vorgesehen sind, wo Medium mit der entsprechenden Temperatur vermutet wird.

Der bei den sogenannten Kombispeichern offen zutage tretende Nachteil der Temperaturschichtung wird gemäß dem Vorschlag aus DE 20 2011 003 668 U1 in einen Vorteil umgemünzt, zugleich werden aber die arteigenen Nachteile dieser Kombispeicher in Kauf genommen.

Insbesondere in energieoptimierten Wärmeversorgungssystemen, wie beispielsweise bei in Eigenheimen installierten Systemen, werden nur Heizleistungen von etwa 4 KW und weniger installiert. Der tatsächliche Wärmebedarf für den Erhalt der Raumtemperaturen liegt gewöhnlich noch darunter.

Bei Inbetriebnahme sowie bei jedem Aufheizvorgang muss die installierte Wärmequelle zunächst das gesamte gespeicherte Medium aufheizen, bevor Nutzwärme entnommen werden kann. Eine solche Anlage hat deshalb eine große Trägheit.

Im Kombispeicher bildet sich dabei auch eine Temperaturschichtung dergestalt aus, dass ein Temperaturgefälle von oben nach unten entsteht. Wird in diesem Zustand durch Wärmeverbraucher eine Wärmemenge entzogen, kühlt sich im oberen Bereich des Kombispeichers das Medium mit der höchsten Temperatur am stärksten ab und kann ein Temperaturniveau erreichen, das unter dem tieferer Schichten liegt. Die Folge der Temperaturumkehr ist, dass das nunmehr kühle Medium nach unten sinkt und damit ein Austausch des Mediums im Kombispeicher zustande kommt. Es entstehen dabei Verwirbelungen, die zu einer Mischtemperatur führen, wobei der Kombispeicher ohne Wärmezufuhr keine Wärmemengen mehr liefern kann.

Bei einem starken Temperaturgefälle kann sich im Inneren des Kombispeichers ein Torus aus Kaltwasser bilden, der beim Sinken Medium verdrängt, durchmischt und auf der Verbraucherseite nicht gewünschte Temperaturänderungen in den Leitungskreisen verursacht.

Zur Vermeidung solcher Effekte haben verschiedene Hersteller in die Wärmetauscherspeichereinheiten Querschotte, Überströmkanäle und dergleichen angeordnet, die solche unerwünschten Effekte vermeiden sollen. Damit steigt jedoch der Aufwand bei der Herstellung solcher Einheiten.

Eine Ausführungsform eines solchen Kombispeichers, die mit einem Minimum an strömungsleitenden Elementen auskommen soll, ist der SPIRA Kombispeicher der Firma FEURON AG, 9430 St. Margrethen, Schweiz. Bei diesem Kombispeicher wird versucht, durch eine spezielle Wendelung einer Rohrschlange, die hier als Schichtladeeinheit bezeichnet ist, eine gleichmäßige Erwärmung unter Beachtung des Entstehens des Temperaturgefälles zu erreichen. Auch dieser Aufbau stellt nicht sicher, dass keine Tori entstehen können. Das große Speichervolumen wiederum wirkt dem Bestreben entgegen, die Aufheizzeiten zu verkürzen. Mithin sind auch mit diesem Kombispeicher aufgebaute Wärmeversorgungssysteme träge und haben keine ausreichenden Steuerungsmöglichkeiten bei einem Überangebot an Wärmemengen. Andererseits müssen fehlende Wärmemengen durch Betrieb von konventionellen Wärmeerzeugern ausgeglichen werden.

Es besteht deshalb ein Bedarf an Wärmeversorgungssystemen, die ohne Trägheit sowohl Wärmemengen abnehmen können als auch ohne Trägheit Wärmemengen an Verbraucher bereitstellen können. Ferner besteht ein Bedarf an Wärmeversorgungssystemen, die einfach aufgebaut sind, hinsichtlich der Speicherung von Wärmemengen in weiten Bereichen variabel sind und auf diese Weise sowohl erzeugerseitig als auch speicherseitig und verbraucherseitig optimierbar sind und im Hinblick auf die Installationskosten einen deutlich verringerten Aufwand verursachen.

Es ist deshalb Aufgabe der Erfindung, ein Wärmeversorgungsverfahren für ein mit einer Wärmesenke arbeitendes Wärmeversorgungssystem vorzuschlagen, das:
- geeignet ist, die Abnahme von Wärmemengen aus Wärmequellen so zu steuern, dass die Kosten dafür möglichst gering gehalten werden,
- an individuelle Erfordernisse leicht angepasst werden kann,
- mit geringer Trägheit arbeitet und deshalb schnell erwärmtes (Heiz-)Medium liefert,
- einfach aufgebaut und einfach steuerbar ist und im Vergleich mit bekannten Wärmeversorgungssystemen deutlich verminderte Installations- und Betriebskosten verursacht.

Es ist ebenso Aufgabe der Erfindung, ein Wärmeversorgungssystem vorzuschlagen, bei dem das Wärmeversorgungsverfahren anwendbar ist.

Diese oben stehende Aufgabe wird gelöst durch ein Wärmeversorgungsverfahren für ein Wärmeversorgungssystem mit den Merkmalen des Patentanspruches 1. Die oben stehende Aufgabe wird weiterhin gelöst mit einem Wärmeversorgungssystem mit den Merkmalen des Patentanspruches 6 Neben- und nachgeordnete Patentansprüche beschreiben Ausführungsformen des erfindungsgemäßen Wärmever-sorgungsverfahrens und Wärmeversorgungssystems.

In der nachstehenden Beschreibung, den Ausführungsbeispielen und den Patentansprüchen werden die nachstehend aufgeführten Begriffe mit folgendem Bedeutungsinhalt verwendet:
Wärmeversorgungssystem - ist eine Anlage, die wenigstens aus einer Wärmequelle und einem im gleichen Leitungskreis angeordneten Wärmeverbraucher besteht. Zusätzlich können in weiteren Leitungskreisen, die mit diesem Leitungskreis verbindbar sind, eine Wärmesenke und/oder ein Speicherelement angeordnet sein.
Wärmesenke - ist ein Wärmetauscher, der die Übergabe von Wärmemengen von einem ersten Medium an ein zweites Medium ohne Vermischen der Medien miteinander ermöglicht und kein zusätzliches Speichervolumen hat.
Wärmetauscher - ist eine Anordnung mit einem Behälter und darin angeordneten Rohrschlangen, wobei im Behälter ein erstes Medium und durch einen Separator getrennt ein zweites Medium vorhanden ist und zwischen beiden Medien ein Wärmeaustausch erfolgt.
Leitungskreis - ist ein geschlossenes bzw. ein offenes Leitungssystem, das ein Medium zwischen einer Wärmequelle und einem Wärmeverbraucher oder zwischen einer Wärmesenke und einem Wärmeverbraucher oder zwischen einem Wärmespeicher und einem Wärmeverbraucher führt.
Wärmespeicher - ist ein Mittel, das in einem Behälter Wärmemengen tragendes Medium enthält und von einem Wärmeerzeuger oder einer Wärmesenke mit Wärmemengen versorgt wird bzw. an Wärmeverbraucher oder an die Wärmesenke Wärmemengen abgibt.
Separator - ist das zwei verschiedene Medien innerhalb des Behälters eines Wärmetauschers trennende Element, das zugleich eine große Oberfläche und eine ausreichende Wärmeleitfähigkeit zur Realisierung eines trägheitsarmen Wärmeaustauschs besitzt.

Nach der Erfindung wird ein Wärmeversorgungssystem der an sich bekannten Art mit wenigstens zwei unabhängigen Wärmequellen, wenigstens einer Wärmesenke und wenigstens einem Wärmeverbraucher so ausgestaltet, dass im Bereich der Wärmesenke ein effektiver Wärmeaustausch zwischen den beteiligten Medien erfolgt, die beim Wärmeaustausch auftretende Trägheit sehr gering ist und im Übrigen ein geringer gerätetechnischer Aufwand vorhanden ist.

Nach der Erfindung wird ferner davon ausgegangen, dass die im Stand der Technik bekannten Anlagen insoweit verbessert werden, dass eine vorhandene primäre Wärmequelle in der Form eines Heizkessels, einer Wärmepumpe, eines Gerätes mit Kräft-Wärme-Kopplung oder einer Elektro- bzw. Gastherme direkt ohne Zwischenschaltung einer Wärmesenke mit den Wärmeverbrauchern verbunden ist und auf diese Weise der Wirkungsgrad der vorgenannten Ein-Weiterhin wird nach der Erfindung davon ausgegangen, dass für die notwendigerweise zum Anschluss externer Wärmequellen im Wärmeversorgungssystem vorhandene Wärmesenke ein hoch effektiver Wärmetauscher mit geringer Trägheit und einem minimalen Speichervolumen zum Einsatz kommt.

Nach der Erfindung wird weiterhin davon ausgegangen, dass unter dem Gesichtspunkt der effektiven und optimierten Energieversorgung das erfindungsgemäße Wärmeversorgungssystem aus erneuerbaren Energiequellen stammende Wärmemengen mit höchster Priorität bearbeitet und den Wärmeverbrauchern zur Verfügung stellt sowie im Falle eines Überangebots an Wärmemengen diese zwischengespeichert werden. Dazu kann einerseits eine Mehrzahl erneuerbare Energie gewinnender Einheiten über die Wärmesenke eingekoppelt werden. Andererseits ist es Bestandteil der Erfindung, aus den genannten Quellen gewonnene Wärmemengen mit Hilfe der Wärmesenke ohne Trägheit durch unnötige Speichervolumina schnell den Verbrauchern zur Verfügung zu stellen und den Verbrauch an Brennstoffen über einen möglicherweise vorhandenen Wärmeverbraucher soweit wie möglich zu reduzieren.

Weiterhin soll nach der Erfindung ein Speicher dem Wärmeversorgungssystem zugeordnet sein, der in der Lage ist, große Wärmemengen zu speichern und der ausschließlich diese Aufgabe hat.

Ein weiteres Element der Erfindung ist eine in der Zuleitung des Speichers angeordnete Pumpenanordnung, die es erlaubt, die Förderrichtung der darin enthaltenen Pumpe zu ändern.

Soweit zur Aufrechterhaltung von Kreisläufen der Einsatz von Pumpen notwendig ist, sollen diese in ihrer Leistung an die aktuell vorhandenen Notwendigkeiten angepasst betrieben werden.

Schließlich wird bei der Erfindung davon ausgegangen, dass jedes Element in dem Wärmeversorgungssystem nach der ihm zukommenden Aufgabe in seinen Eigenschaften optimiert wird und die aus dem Stand der Technik durch Kombinationen verschiedener Aufgaben in einzelnen Elementen notwendigen Kompromisse ausgeschlossen werden.

Nach der Erfindung wird ein Wärmeversorgungsverfahren zum Betrieb des erfindungsgemäßen Wärmeversorgungssystems vorgeschlagen, das nutzbare externe Wärmequellen, wie thermische Solarkollektoren, mit Kraft-Wärme-Kopplung arbeitende Aggregate, in technischen Prozessen integrierte Kühleinrichtungen, wie Abgas-Wärmetauscher und dergleichen, für die Erzeugung der im Wärmeversorgungssystem benötigten Wärmemengen bevorzugt.

Es wird weiterhin vorgeschlagen, anfallende überschüssige Wärmemengen in einem Speicher zwischenzuspeichern und bei Bedarf von dort wieder dem Kreislauf zuzuführen.

Erfindungsgemäß soll weiterhin, solange aus der Wärmesenke oder aus dem Speicher gelieferte Wärmemengen ausreichend sind, ein vorhandener Wärmeerzeuger außer Betrieb gesetzt bleiben.

Es ist ferner vorgeschlagen, den Betrieb des Wärmeversorgungssystems mithilfe einer Steuerung zu führen, wobei diese stets eine Wärme- und Energiebilanz des Wärmeversorgungssystems ermittelt und davon Steuerbefehle an die im System vorhandenen Einheiten ableitet.

Die Wärmesenke ist so ausgelegt, dass sie bei kleinstem Volumen einen größtmöglichen Umwandlungsgrad hat und durch ihre Bauweise kein unnötiges, Trägheit erzeugendes, Volumen vorhanden ist. Um eine solche Wärmesenke hinsichtlich der Kosten für die Herstellung zu optimieren, ist der diese bildende Wärmetauscher als zylindrischer Behälter mit wenigstens einer im Inneren angeordneten spiralförmigen Rohrschlange ausgeführt. Gegenüber bekannten Kombispeichern nimmt die Rohrschlange einen bedeutend größeren Volumenanteil des Behälters im Wärmetauscher ein. Das rohrförmige Gehäuse minimiert weiterhin die Oberfläche des Behälters des Wärmetauschers, wobei dieser durch eine Ummantelung in hohem Maße wärmeisoliert ist. Durch die aufgeführten Maßnahmen erreicht der Wärmetauscher einen Wirkungsgrad q₁₀₀ von wenigstens 90 %.

Nach der Erfindung wird die Wärmesenke so ausgeführt, dass mithilfe eines hocheffektiven Wärmetauschers ein schneller Wärmeübergang erfolgt und dabei auf eine Speicherung von erwärmtem Medium verzichtet wird. Sofern eine Speicherung von Wärmemengen notwendig ist, erfolgt diese ausschließlich in zusätzlich angeordneten Speicherelementen, die über einen eigenen Leitungskreis an die Wärmesenke angeschlossen sind.

Der eingesetzte Wärmetauscher hat weiterhin gegenüber den bekannten Kombispeichern Vorteile dahingehend, dass die geringeren Abmessungen keine ausgeprägten Strömungen und Schichtbildungen innerhalb des Behälters zulassen.

Erfindungsgemäß wird damit erreicht, dass die mit erwärmten Medien ankommenden Wärmemengen von einem ersten Medium schnell auf ein zweites Medium, das eigentliche Heizmedium, übertragen werden, dieses auf eine Solltemperatur erwärmt wird und ebenso schnell der Abtransport der Wärmemengen mit dem zweiten Medium erfolgen kann.

Dies erfolgt in einem Wärmetauscher, der innerhalb eines Behälters eine Rohrschlange aus einem Wellrohr oder Wellschlauch besitzt. Außerdem wird im Wellrohr oder Wellschlauch eine Strömungsgeschwindigkeit eingestellt, die bewirkt, dass die Strömung turbulent wird und auf diese Weise sich der Wärmeaustausch intensiviert.

Um dies zu erreichen, ist der Wärmetauscher so ausgelegt, dass in Abhängigkeit vom geforderten Volumenstrom die einzusetzenden Rohrschlangen so dimensioniert sind, dass die turbulente Strömung im Normalbetrieb immer vorhanden ist.

Es ist weiterhin möglich, im Wärmetauscher mehrere Rohrschlangen anzuordnen. Dies kann dann zweckmäßig sein, wenn mehrere externe Quellen den Wärmetauscher speisen und diese Quellen hinsichtlich Temperatur, Volumenstrom und Eigenschaften der zirkulierenden Medien Unterschiede aufweisen.

Auf diese Weise können unterschiedlichste Wärmequellen eingesetzt werden. Es ist lediglich notwendig, dass diese eine Zufuhr von Wärmemengen bewirken.

Treten im Wärmeversorgungssystem häufiger Überangebote an Wärmemengen auf, wie dies typischerweise beim Anschluss solarthermischer Kollektoren der Fall ist, kann ein im System vorhandenes Speicherelement die überschüssigen Wärmemengen zwischenspeichern und auf diese Welse die Wärmeversorgung puffern.

Das zu installierende Speichervolumen ist dabei nahezu unbegrenzt, da die Spelcheralemente hinsichtlich ihres Volumens und der Anzahl derselben frei wählbar sind.

Das Laden bzw. Entladen der Speicherelemente kann durch eine Pumpenanordnung erfolgen, die mit einer Pumpe einen Betrieb in zwei Förderrichtungen ermöglicht.

Um diese Pumpe energieoptimal zu betreiben, wird sie über Pulsweitenmodulation angesteuert und erhält immer genau die Energiemenge, die zum Erreichen der vorgegebenen Förderströme notwendig ist. Es ist möglich, den Pulsweitenregler in das Pumpengehäuse oder in eine separate Steuerung zu integrieren. Er kann mit analogen Signalen angesteuert werden.

Auf die gleiche Weise können alle im Wärmeversorgungssystem vorhandenen Pumpen angesteuert werden.

Das Wärmeversorgungssystem wird über eine Steuereinheit so gesteuert, dass stets ein ausgewogenes Verhältnis zwischen Energieverbrauch und Energiezuführung besteht. Dabei sorgt die Steuerung dafür, dass zunächst mit hoher Priorität Energiemengen bereitgestellt werden, die von natürlichen Quellen (solarthermisch, Erdwärme) oder aus Verlustwärmemengen technischer Prozesse (z. B. Abgaswärme) stammen. Gibt es bei diesen Quellen ein Überangebot an Wärmemengen, wird zunächst mit hoher Priorität der erste Leitungskreis, dass heißt die Wärmeverbraucher, versorgt und mit niedrigerer Priorität vorhandene Speicher geladen.

Erst wenn ein Fehlbedarf an Wärmemengen vorhanden ist, der nicht mehr mit gespeicherten Wärmemengen auszugleichen ist, wird die systeminterne Wärmequelle zum Nachheizen eingesetzt.

Die Steuerung kann mehrere pulsweitenmodulierte Ausgänge haben, an die jeweils Pumpen des Wärmeversorgungssystems angeschlossen werden können.

Das Wärmeversorgungsverfahren ist so ausgestaltet, dass zunächst in einem ersten Leitungskreis mit einem Wärmeerzeuger, der ein herkömmlicher Heizkessel, eine Wärmepumpe oder ein Elektroboiler sein kann, ein erwärmtes Heizmedium erzeugt und mit Hilfe einer Pumpe zu einem Wärmeverbraucher gefördert wird. Gleichzeitig wird in einem dritten Leitungskreis von einer Wärmesenke erwärmtes Heizmedium geliefert, das anteilig in den ersten Leitungskreis eingespeist wird. Sofern die Zufuhr an erwärmtem Heizmedium aus dem dritten Leitungskreis ausreichend ist, wird die im ersten Leitungskreis befindliche Wärmequelle zurückgefahren oder gänzlich abgeschaltet. Eine Steuerung überwacht diese Vorgänge und erzeugt aus im Wärmeversorgungssystem erfassten Messwerten eine Wärmebilanz. Abhängig davon wird erwärmtes Heizmedium aus der Wärmesenke, oder von der Wärmequelle bezogen und an die Wärmeverbraucher weiter geleitet.

Das Wärmeversorgungsverfahren kann auch so ausgestaltet sein, dass bei einem Überangebot in der Wärmebilanz anteilig Wärmemengen einem Speicherelement zugeführt werden und von dort bei einem Fehlbedarf wieder abrufbar sind. Die Steuerung bezieht in diesem Fall gespeicherte Wärmemengen in die zu ermittelnde Wärmebilanz mit ein und behandelt dabei Wärmemengen aus dem dritten Leitungskreis mit höchster, Wärmemengen aus dem zweiten Leitungskreis mit nachgeordneter und durch die Wärmequelle zu erzeugende Wärmemengen mit niedrigster Priorität.

Hinsichtlich des Wärmeverbrauches behandelt die Steuerung im ersten Leitungskreis entstehenden Wärmebedarf mit oberster Priorität und im zweiten bzw. im dritten Leitungskreis entstehende Bedarfslücken mit niedrigerer Priorität.

Das Wärmeversorgungssystem kann über Ventil- und Pumpensteuerungen so ausgeführt sein, dass beispielsweise gespeicherte Wärmemengen aus dem Speicherelement in den dritten Leitungskreis gefördert werden können und über die Wärmesenke beispielsweise den Kreislauf eines solarthermischen Kollektors anheizen, damit dieser beispielsweise im Fall von Vereisung oder eines Schneebelages frei wird und so zum frühest möglichen Zeitpunkt wieder Wärmemengen liefern kann.

Durch den oben beschriebenen Aufbau des erfindungsgemäßen Wärmeversorgungssystems ist die Trägheit der Wärmeübertragung äußerst gering und es kann in kurzer Zeit nach Aufnahme von Wärme durch das zweite Medium auch bereits Nutzwärme an den Wärmeverbrauchern entnommen werden. Das bedeutet, dass beispielsweise notwendige Aufheizvorgänge, wie beispielsweise bei einer Inbetriebnahme oder beim Wiederaufheizen nach Absenkungsphasen ein solches Wärmeversorgungssystem sehr schnell notwendige Wärmemengen liefern kann.

In der Wärmesenke ist nur ein sehr geringes Speichervolumen vorhanden, das zunächst aufgeheizt und später auf der gleichen Solltemperatur gehalten werden muss, wie das Heizmedium. Daraus ergeben sich einerseits der hohe Wirkungsgrad und andererseits die hohe Reaktionsgeschwindigkeit des erfindungsgemäßen Wärmetauschers.

Die Erfindung wird nachstehend anhand eines Ausführungsbeispieles und einer Zeichnung näher erläutert. Dabei zeigt:

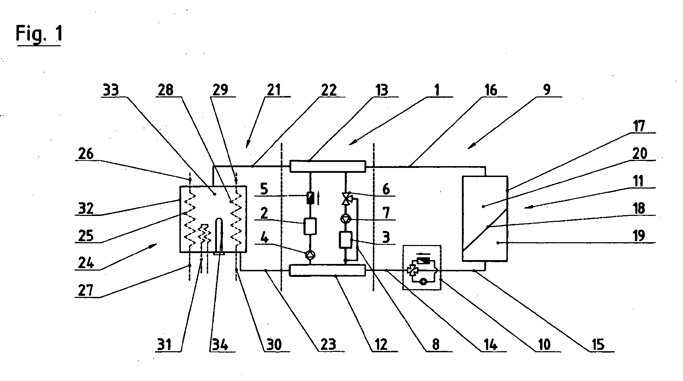

- Fig. 1 -: Eine schematische Darstellung des erfindungsgemäßen Wärmeversorgungssystems.

In einem ersten Leitungskreis **1** sind wenigstens ein Wärmeerzeuger **2** und ein Wärmeverbraucher **3** angeordnet. Über eine Pumpe **4,** die auf der Zulaufseite (kalte Seite des Wärmerzeugers) angeordnet ist, wird der notwendige Kreislauf aufrechterhalten. Auf der warmen Seite des Wärmeerzeugers ist zudem ein Rückflussverhinderer **5** angeordnet.

Der Wärmeverbraucher **3** wird mithilfe eines 3/3-Ventils **6** und einer Pumpe **7** so geschaltet, dass eine Rückkopplung über eine Rücklaufleitung **8** möglich ist und mithilfe des 3/3-Ventils **6** erforderlichenfalls ein Notumlauf bei Verschluss des Wärmeverbrauchers **3** gewährleistet werden kann. Für diesen Fall kann das 3/3-Ventil **6** von einer in Fig. **1** nicht dargestellten Steuereinheit angesteuert werden.

An den ersten Leitungskreis **1** ist ein zweiter Leitungskreis **9** anschließbar, der eine Pumpenanordnung **10** und wenigstens ein Speicherelement **11** enthält. Für die Anbindung des zweiten **9** an den ersten Leitungskreis **1** sind in diesem zusätzlich hydraulische Weichen **12** und **13** angeordnet. Dabei handelt es sich letztlich um Leitungsabschnitte mit einem größeren Innendurchmesser, die ein weitgehend freies Vermischen der Medienströme ermöglichen.

Bei einem Überschuss in dem Wärmeerzeuger **2** erzeugter Wärmemengen kann über die Leitung **14** die Pumpenanordnung **10** dergestalt aktiviert werden, dass sie aus dem Speicherelement **11** über die Leitungen **15** und **14** Medium mit einer niedrigeren Temperatur der hydraulischen Weiche **12** zuführt, während gleichzeitig über die Leitung **16** erwärmtes Medium in das Speicherelement **11** gefördert und dasselbe faktisch aufgeladen wird.

Die Richtung des Druckstroms kann ebenso umgekehrt werden, indem in der Pumpenanordnung **10** die Förderrichtung gewechselt wird, sodass aus der hydraulischen Weiche **12** kühleres Medium in das Speicherelement **11** gefördert wird, dadurch eine Verdrängung von Medium mit höherer Temperatur über die Leitung **15** in die hydraulische Weiche **13** erfolgt und die geförderten Wärmemengen dem Wärmeverbraucher **3** zur Verfügung stehen.

Das Speicherelement **11** besteht im Wesentlichen aus einem Behälter **17** mit einem größeren Volumen, in dem sich ein Übergangsbereich **18** zwischen dem an sich kalten Bereich **19** und dem warmen Bereich **20** ausgebildet hat. Dabei wird durch die Ausgestaltung der Zu- beziehungsweise Ableitungen sichergestellt, dass beim Laden bzw. Entladen des Speicherelements keine ungewollte Vermischung des Speichermediums und damit keine irgendwie geartete Durchschnittstemperatur im Speicherelement **11** entsteht, was letztlich die Trägheit des Speicherelements **11** erhöhen würde.

In einem dritten Leitungskreis **21,** der mit den hydraulischen Weichen **12** und **13** über die Leitungen **22** und **23** mit den hydraulischen Weichen **12** und **13** verbindbar ist, wird eine Wärmesenke **24** an den ersten Leitungskreis **1** angeschlossen.

Die Wärmesenke enthält wenigstens eine erste Rohrschlange **25,** die an ihren Anschlüssen **26** und **27** mit einer externen Wärmequelle, die in Fig. 1 nicht dargestellt ist, verbunden sein kann. Solcher Art externer Wärmequellen können thermische Solarkollektoren sein, Warmwasserkreisläufe von Wärmepumpen, Kühlwasserkreisläufe von Motoren oder technischen Anlagen oder Kreisläufe von Wärmetauschern, die beispielsweise in Abgasanlagen von Motoren oder technischen Anlagen installiert sind.

Eine zweite Rohrschlange **28** kann mit ihren Anschlüssen **29** und **30** wiederum mit einer externen Wärmequelle der oben beschriebenen Art verbunden sein.

Es ist auch möglich, die Rohrschlangen **25** und **28** jeweils mit ihren Anschlüssen **26** und **29** sowie **27** und **30** zusammenzuschließen und somit eine Parallelschaltung beider Rohrschlangen **25** und **28** zu erreichen.

Eine weitere Möglichkeit besteht darin, dass die Rohrschlange **28** der Verbindung mit externen Wärmeerzeugern dient, während die Rohrschlange **25** der Brauchwassererwärmung dient und damit einen separaten vierten Leitungskreis, der mit dem Wärmeversorgungssystem an sich nichts gemein hat, bildet.

Für die Brauchwassererwärmung kann allerdings auch eine weitere Rohrschlange **31** eingesetzt werden.

Mithin kann jede der drei Rohrschlangen **25, 28** und **31** entweder mit einer externen Wärmequelle verbunden sein, in einer Parallelschaltung zusammengeschaltet sein oder jede der Rohrschlangen **25, 28** und **31** wird über einen separaten, in Fig. 1 nicht dargestellten Leitungskreis mit einem Wärmeerzeuger oder einem Wärmeverbraucher verbunden.

Um eine hohe Effektivität bei Übertragungsprozessen zwischen den Medien in der Wärmesenke **24** zu erreichen, ist deren Volumen klein gehalten und der Behälter **32** in seiner Außenform so gewählt, dass er nur eine geringe Oberfläche hat.

Vorzugsweise wird der Behälter **32** deshalb als zylindrischer Behälter mit flachen Stirnseiten ausgeführt und zusätzlich wärmegedämmt.

Für die Rohschlangen **25, 28** und **31** werden bevorzugt nicht rostende Stähle verwendet, um eine lange Gebrauchsdauer der Wärmesenke **24** zu erreichen. Alternativ kann diese auch mit Werkstoffen ausgeführt werden, die eine hohe Wärmeleitfähigkeit haben.

Besonders bevorzugt werden für die Erzeugung der Rohrschlangen **25, 28** und **31** Wellrohre oder Wellschläuche. Diese ermöglichen es, dass bei Überschreiten bestimmter Strömungsgeschwindigkeiten in den Wellentälern eine turbulente Strömung entsteht. Diese turbulente Strömung sichert einen effektiven Wärmeaustausch.

Die rohrförmige Ausführung des Behälters **32** sichert in Verbindung mit entsprechend dimensionierten Rohrschlangen **25, 28** und **31** auch eine turbulente Strömung im Behälterinneren **33,** sodass die Umwandlungsprozesse in der Wärmesenke **24** effektiv verlaufen.

Durch die Verwendung von Wellrohren oder Wellschläuchen für die Rohrschlangen **25, 28** und **31** entsteht des Weiteren der Vorteil, dass bei Temperaturwechseln ein Ausdehnungsprozess entsteht, der zugleich Ablagerungen in den Rohrschlangen **25, 28** und **31** verhindert. Jedenfalls würden durch ständige Änderungen der Dimensionen sich bildende Ablagerungen immer wieder abgelöst und im Medienstrom verbleiben.

Im Behälter **32** der Wärmesenke **24** ist ferner ein Elektroheizkörper **34** integriert, der entweder bei Vorhandensein preiswerter Mengen an Elektroenergie das Erwärmen des Heizmediums übernimmt oder bei Nichtbenutzung des Wärmeversorgungssystems eine Solltemperatur in der Wärmesenke **24** aufrechterhält, die für die Brauchwassererwärmung notwendig ist. Er kann ebenso zu Zwecken des Frostschutzes eingesetzt werden.

Mit der oben beschriebenen Anordnung des Wärmeversorgungssystems wird erreicht, dass bei Benutzung des Wärmeerzeugers **2** ohne nochmalige Umwandlungsvorgänge das erwärmte Heizmedium direkt dem Wärmeverbraucher **3** zugeführt und damit ein energieökonomischer Betrieb gewährleistet wird.

Weiterhin wird erreicht, dass der im Wärmeversorgungssystem vorhandene Wärmeerzeuger **2** in vielen Anwendungsfällen vollständig durch äußere Wärmequellen und die von diesen gelieferten Wärmemengen ersetzt werden kann, wobei diese über die hoch effektiv arbeitende Wärmesenke **24** in das Wärmeversorgungssystem eingekoppelt werden.

In den Fällen, bei denen externe Energiequellen Medienströme erzeugen, die nur in einem eigenen Leitungskreis geführt werden können, werden die Austauschprozesse über eine Wärmesenke und dort jeweils angeordnete Rohrschlangen **25, 28** und **31** geführt.

Ergibt die Wärmebilanz der Wärmeversorgungseinrichtung einen Überschuss an Wärmemengen, können diese über den zweiten Leitungskreis **9** und ein dort angeordnetes Speicherelement **11** zwischengespeichert werden. Über das Speicherelement und eine diesem zugeordnete Pumpenanordnung **10** kann so ein Ausgleich bei tageszeitlich schwankendem Aufkommen an Wärmemengen aus externen Wärmequellen erreicht werden.

Das in Fig. **1** schematisch dargestellte Wärmeversorgungssystem lässt sich auf vielfache Weise erweitern und ergänzen. So können dem Speicherelement **11** eine beliebige Anzahl weiterer gleichartiger Speicherelemente zugeordnet und auf diese Weise eine Speicherbatterie erzeugt werden. Ebenso steht der Wärmeverbraucher 3 stellvertretend für eine Mehrzahl von Wärmeverbrauchern. Ebenso für unterschiedliche Einsatzfälle dieser Wärmeverbraucher. So können in einem oder in mehreren Gebäuden Heizkörper als Wärmeverbraucher eingesetzt sein. Ebenso können Gewächshäuser, Swimmingpools oder Lufterhitzer anstelle der Wärmeverbraucher **3** eingesetzt werden. Weiterhin können mehrere Wärmesenken **24** parallel geschaltet werden. Dies kann bei entsprechend hohem Umsatz an Wärmemengen ebenso notwendig sein, wie bei einer größeren Zahl anzuschließender Wärmequellen.

Da Fig. 1 nur das Grundschema für das erfindungsgemäße Wärmeversorgungssystem zeigt, ist es für einen Fachmann verständlich, dass bei der Errichtung eines solchen Systems mit allen jeweils erforderlichen Optionen in die verschiedenen Leitungen noch Pumpen und/oder Steuerelemente, wie sie in Wärmeversorgungssystemen üblich sind, eingebaut werden müssen. Diese sind für das Wesen der Erfindung nicht wesentlich und werden deshalb in Fig. 1 nicht gezeigt.

Eine auf das System einwirkende Steuerung, die Fig. 1 gleichfalls nicht zeigt, wirkt jeweils auf den Wärmerzeuger **2,** den Wärmeverbraucher **3,** das Speicherelement **11** und die Wärmesenke **24** sowie die Pumpenanordnung **10** so ein, dass einerseits mit Blick auf den Wärmebedarf innerhalb des Wärmeversorgungssystems eine ausreichende Bereitstellung von Wärmemengen erfolgt, andererseits stets die Wärmemengen den Wärmverbraucher **3** zugeführt werden, die am kostengünstigsten zu erhalten sind.

Ferner kann die übergeordnete Steuerung Notwendigkeiten aus dem Betrieb externer Wärmequellen, wie beispielsweise die Notwendigkeit eines ständigen Betriebs angeschlossener Abgaswärmetauscher, notwendige Abnahmen oder auch Aufheizprozesse an thermischen Solarkollektoren, die Wärmeabnahme aus im Betrieb befindlichen technischen Anlagen mit entsprechender Priorität verarbeiten.

Des Weiteren verfügt die Steuerung über Ausgänge zu Pumpen, die eine effektive Steuerung dieser Pumpen in Abhängigkeit von im System vorhandenen Notwendigkeiten ermöglichen. Bevorzugt wird hierbei eine Ansteuerung von Pumpen über ein Verfahren der Pulsweitenmodulation (PWM), so dass nur die für die geforderten Betriebsverhältnisse der Pumpen notwendige Energiemenge den Pumpen zugeführt wird.

Das erfindungsgemäße Wärmeversorgungsverfahren für das oben beschriebene Wärmeversorgungssystem geht davon aus, dass durch eine Steuerung zunächst auf den ersten Leitungskreis **1** dergestalt eingewirkt wird, dass der dort angeordnete Wärmeerzeuger **2** und ebenso im ersten Leitungskreis **1** angeordnete Wärmeverbraucher **3,** Pumpe **4** und 3/3-Ventil **6** durch die Steuerung mit Steuerbefehlen versorgt werden.

Sofern der Wärmeerzeuger **2** einen Überschuss an Wärmemengen liefert, können diese mithilfe einer Pumpenanordnung **10** in ein Speicherelement **11,** die beide im zweiten Leitungskreis **9** angeordnet sind, zwischengespeichert werden. Der zweite Leitungskreis **9** ist mit dem ersten Leitungskreis **1** verbindbar. Ebenso kann in Abhängigkeit von örtlichen Gegebenheiten eine fest installierte Einbindung ausgeführt sein.

Ein dritter Leitungskreis **21** ist gleichfalls mit dem ersten Leitungskreis **1** verbindbar oder durch eine Festinstallation an diesen gebunden. Er enthält eine Wärmesenke **24,** die Wärmemengen von externen Wärmequellen übernimmt und über Austauschprozesse dem in den Leitungskreisen **1, 9** und **21** zirkulierendem Medium zuführt. Die Übernahme der Wärmemengen erfolgt mithilfe von wenigstens einer Rohrschlange **25** im Behälter **32.** Die so in das Wärmeversorgungssystem eingebrachten Wärmemengen werden aus dem dritten Leitungskreis **21** dem ersten Leitungskreis **1** zugeführt und mit dem dort zirkulierenden Medium vermischt. Bei entsprechendem Aufkommen kann das im ersten Leitungskreis **1** zirkulierende Medium allein aus der Wärmesenke **24** zugeführt werden, während der Wärmeerzeuger **2** entweder stillgesetzt oder in seiner Leistung deutlich gedrosselt wird.

Die im Wärmeversorgungssystem vorhandenen Elemente werden durch eine Steuerung so zusammengefasst und angesteuert, dass auf der Grundlage einer Wärmebilanz zunächst ermittelt wird, welcher Wärmebedarf überhaupt besteht. Durch Vergleich mit dem Wärmeangebot aus Wärmeerzeuger **2,** Wärmesenke **24** und Speicherelement **11** wird über einen Algorithmus eine Verarbeitung von Eingangsinformationen zu Steuerbefehlen für einzelne Elemente des Wärmeversorgungssystems ausgeführt.

Dabei wird im Allgemeinen der Bedarf an Wärmemengen für den Wärmeverbraucher **3** mit höchster Priorität behandelt und die Wärmequellen entsprechend ihrer Leistungsfähigkeit zur Lieferung der benötigten Wärmemengen aufgehoben. Dabei kann die Wärmesenke **24** dergestalt priorisiert sein, dass ihr von externen Wärmequellen kontinuierlich Wärmemengen zugeführt werden, die im Interesse einer stabilen Verfahrensführung bei der externen Quelle übernommen werden müssen. Davon abhängig werden mit höchster Priorität der Wärmebedarf und nachrangig die Speicherung von Wärmemengen ausgeführt.

Eine Zufuhr von Wärmemengen wird bevorzugt aus dem dritten Leitungskreis **21** erfolgen. Mit niederer Priorität werden Wärmemengen aus dem Speicherelement **11** abgerufen. Schließlich wird nur dann, wenn der Wärmebedarf nicht gedeckt werden kann, der Wärmeerzeuger **2** in Betrieb genommen.

Der in der Steuerung ausgeführte Algorithmus berücksichtigt neben den oben genannten Hauptbedingungen im Übrigen ein Betriebsregime, durch das Aufwendungen an Elektroenergie ebenfalls minimiert werden. So kann eine Ausgestaltungsvariante der Steuerung vorsehen, dass insbesondere im Wärmeversorgungssystem vorhandene Pumpen über Anschlüsse angesteuert werden, die eine so genannte Pulsweitensteuerung (PWM) ausführen.

Schließlich sieht eine Ausgestaltungsform des Verfahrens auch vor, durch die Steuerung einen Heizkörper **34** in der Wärmesenke **24** anzusteuern. Der Heizkörper **34** kann dabei eine Solltemperatur in der Wärmesenke **24** aufrechterhalten. Eine Ausgestaltungsform des Verfahrens kann vorsehen, den Kreislauf zu einem thermischen Solarkollektor dergestalt vorzuwärmen, dass Vereisungen oder Schneebedeckungen des Solarkollektors zügig abgetaut werden und derselbe schneller zur Gewinnung von Wärmemengen zur Verfügung steht.

Eine weitere Ausgestaltungsform des Verfahrens kann vorsehen, die Wärmesenke **24** mithilfe des Heizkörpers **34** als Elektroboiler zu betreiben. Dies kann dann zweckmäßig sein, wenn ein kostengünstiges Angebot an Elektroenergie zur Verfügung steht und sich eine elektrische Heizung über die Wärmesenke **24** lohnt.

Die Erfindung hat also den Vorteil, dass ein Wärmeversorgungssystem vorgeschlagen wird, das mit geringem Aufwand an Bauteilen effektiv betrieben werden kann und das insbesondere mit einer hoch effektiv arbeitenden Wärmesenke ausgestattet ist, die praktisch keine Trägheit hat. Es ist weiterhin ein Vorteil der Erfindung, dass ein Wärmeversorgungsverfahren ausgeführt werden kann, bei dem schnell und in ausreichendem Maß Wärmemengen zur Verfügung gestellt werden können, wobei mithilfe einer angepassten Steuerung die Möglichkeiten eines effektiven Betriebs des Wärmeversorgungssystems und etwaige bestehende Notwendigkeiten hinsichtlich der Gewinnung von Wärmemengen und des Wärmeverbrauchs berücksichtigt werden.

### Bezugszeichenliste

- 1: Leitungskreis
- 2: Wärmeerzeuger
- 3: Wärmeverbraucher
- 4: Pumpe
- 5: Rückflussverhinderer
- 6: 3/3- Ventil
- 7: Pumpe
- 8: Rücklaufleitung
- 9: Leitungskreis
- 10: Pumpenanordnung
- 11: Speicherelement
- 12: hydraulische Weiche
- 13: hydraulischen Weiche
- 14: Leitung
- 15: Leitung
- 16: Leitung
- 17: Behälter
- 18: Übergangsbereiche
- 19: kalter Bereich
- 20: warmer Bereich
- 21: Leitungskreis
- 22: Leitung
- 23: Leitung
- 24: Wärmesenke
- 25: Rohrschlange
- 26: Anschluss
- 27: Anschluss
- 28: Rohrschlange
- 29: Anschluss
- 30: Anschluss
- 31: Rohrschlange
- 32: Behälter
- 33: Behälterinneres
- 34: Heizkörper

## Patentansprüche

1. Wärmeversorgungsverfahren für ein Wärmeversorgungssystem, das wenigstens aus
einem ersten Leitungskreis (1) mit einem Wärmeerzeuger (2) und einem Wärmeverbraucher (3), in dem mit wenigstens einer Pumpe (4) erwärmtes Medium vom Wärmeerzeuger (2) zum Wärmeverbraucher (3) transportiert wird,
einem zweiten Leitungskreis (9), der mit dem ersten (1) und/oder einem dritten Leitungskreis (21) verbindbar ist und ein Speicherelement (11) sowie eine Pumpenanordnung (10) enthält,
einem dritten Leitungskreis (21), der mit dem ersten Leitungskreis (1) verbindbar und in dem eine Wärmesenke (24) angeordnet ist,
wobei in der Wärmesenke (24) über darin angeordnete Rohrschlangen (25, 28) als Separatoren weitere Wärmeerzeuger eingekoppelt werden, die eine mit einer Solltemperatur im ersten Leitungskreis (1) nicht übereinstimmende Temperatur haben und/oder die mit einem vom Medium im ersten Leitungskreis (1) abweichenden Medium arbeiten und wenigstens gegenüber dem ersten Leitungskreis (1) hydraulisch getrennt sind,
besteht, wobei
im ersten Leitungskreis (1) mit einem Wärmeerzeuger (2) ein erwärmtes Heizmedium erzeugbar ist und mithilfe einer Pumpe (4) zu einem Wärmeverbraucher (3) gefördert werden kann,
über die im dritten Leitungskreis (21) angeordnete Wärmesenke (24) erwärmtes Medium lieferbar ist, das mit Wärme aus solarthermischen Modulen und/oder von Abwärme erzeugenden Geräten und/oder aus Abgaswärmetauschern und/oder anderen Wärmequellen in der Wärmesenke (24) mit den Rohrschlangen (25,28) erwärmt wird und direkt in den ersten Leitungskreis (1) eingespeist werden kann, mit dem im ersten Leitungskreis (1) zirkulierenden Medium vermischt wird oder dieses zumindest teilweise ersetzt,
**dadurch gekennzeichnet, dass**
bei dem mit Hilfe einer Steuerungseinrichtung aus dem Wärmebedarf des Wärmeverbrauchers (3), dem Wärmeangebot der Wärmesenke (24), des Speicherelements (11) sowie der erzeugbaren Wärmemenge des Wärmeerzeugers (2) eine Wärmebilanz erstellt wird
und ein in der Wärmebilanz ausgewiesener Wärmebedarf bevorzugt aus der im dritten Leitungskreis (21) angeordneten Wärmesenke (24) nachfolgend aus dem Speicherelement (11) und schließlich durch den Wärmeerzeuger (2) gedeckt wird.

2. Wärmeversorgungsverfahren nach Patentanspruch 1
**dadurch gekennzeichnet, dass**
die Steuereinrichtung bei einem Überangebot an Wärmemengen aus der Wärmesenke (24) den errechneten Überschuss in das im zweiten Leitungskreis (9) angeordnete Speicherelement (11) leitet, wobei dies mit einer im zweiten Leitungskreis (9) angeordneten Pumpenanordnung (10) geschieht.

3. Wärmeversorgungsverfahren nach einem der Patentansprüche 1 oder 2,
**dadurch gekennzeichnet, dass**
der im Wärmeversorgungssystem entstandene Bedarf an Wärmemengen durch die Wärmesenke (24), bei Unterversorgung zusätzlich durch das Speicherelement (11)
und bei weiter bestehender Unterversorgung durch den Wärmeerzeuger (2) gedeckt wird.

4. Wärmeversorgungsverfahren nach Patentanspruch 3,
**dadurch gekennzeichnet, dass**
bei Betrieb des Wärmeerzeugers (2) ein entstehender Überschuss an Wärmemengen dem Speicherelement (11) zugeführt wird.

5. Wärmeversorgungsverfahren nach einem der Patentansprüche 3 oder 4,
**dadurch gekennzeichnet, dass**
die Wärmesenke (24) über einen Heizkörper (34) bei Unterschreitung einer Grenztemperatur zusätzlich beheizt wird.

6. Wärmeversorgungssystem, das wenigstens aus
einem ersten Leitungskreis (1) mit einem Wärmeerzeuger (2) und einem Wärmeverbraucher (3), in dem mit wenigstens einer Pumpe (4) erwärmtes Medium vom Wärmeerzeuger (2) zum Wärmeverbraucher (3) transportiert wird, einem zweiten Leitungskreis (9), der mit dem ersten (1) und/oder einem dritten Leitungskreis (21) verbindbar ist und ein Speicherelement (11) sowie eine Pumpenanordnung (10) enthält,
einem dritten Leitungskreis (21), der mit dem ersten Leitungskreis (1) verbindbar und in dem eine Wärmesenke (24) angeordnet ist,
wobei in der Wärmesenke (24) über darin angeordnete Rohrschlangen (25, 28) als Separatoren weitere Wärmeerzeuger eingekoppelt sind, die eine mit einer Solltemperatur im ersten Leitungskreis (1) nicht übereinstimmende Temperatur haben und/oder die mit einem vom Medium im ersten Leitungskreis (1) abweichenden Medium arbeiten und wenigstens gegenüber dem ersten Leitungskreis (1) hydraulisch getrennt sind,
einer Steuerungseinrichtung,
besteht, wobei
im ersten Leitungskreis (1) mit einem Wärmeerzeuger (2) ein erwärmtes Heizmedium erzeugbar ist und mithilfe einer Pumpe (4) zu einem Wärmeverbraucher (3) gefördert werden kann,
über die im dritten Leitungskreis (21) angeordnete Wärmesenke (24) erwärmtes Medium lieferbar ist, das mit Wärme aus solarthermischen Modulen und/oder von Abwärme erzeugenden Geräten und/oder aus Abgaswärmetauschern und/oder anderen Wärmequellen in der Wärmesenke (24) mit Rohrschlangen (25, 28) erwärmt werden kann und direkt in den ersten Leitungskreis (1) eingespeist werden kann, mit dem im ersten Leitungskreis (1) zirkulierenden Medium vermischt werden kann oder dieses zumindest teilweise ersetzen kann,
**dadurch gekennzeichnet, dass**
in dem
Wärmeversorgungssystem eine Wärmeversorgungsverfahren nach einem der Patentansprüche 1 bis 5 ausgeführt wird und dass
die Wärmesenke (24) ein Wärmetauscher ist, der ein Volumen von maximal 100 l hat.

7. Wärmeversorgungssystem nach Patentanspruch 6,
**dadurch gekennzetchnet, dass**
die Wärmesenke (24) eine Separatorfläche von wenigstens 250 cm²/l Behälterinhalt, bezogen auf eine der Rohrschlangen (25) oder (28) hat.

8. Wärmeversorgungssystem nach Patentanspruch 6,
**dadurch gekennzelchnet, dass**
die Wärmesenke (24) einen Separator in der Form einer Rohrleitungsspirale mit einer profilierten Wandung hat.

9. Wärmeversorgungssystem nach Patentanspruch 8,
**dadurch gekennzeichnet, dass**
der Separator eine Rohrleitungsschlange aus Wellrohr oder Wellschlauch ist.

10. Wärmeversorgungssystem nach Patentanspruch 6,
**dadurch gekennzeichnet, dass**
die erste (25) und/oder die zweite Rohrschlange (28) in der Wärmesenke (24) an ein solarthermisches Modul und/oder eine Wärmepumpe und/oder ein Blockhelzkraftwerk und/oder einen Kühlkreislauf eines Abwärme erzeugenden Gerätes und/oder an einen Abgaswärmetauscher und/oder an eine andere Wärmequelle anschließbar sind.

11. Wärmeversorgungssystem nach Patentanspruch 6,
**dadurch gekennzeichnet, dass**
die Wärmesenke (24) einen vierten unabhängigen Leitungskreis hat, in dem in einer Rohrschlange (31) der Wärmesenke (24) Frischwasser erwärmt wird.

## Claims

1. A heat supply method for a heat supply system, composed of at least
a first conduit circuit (1) comprising a heat generator (2) and a heat consumer (3), in which heated medium is transported from the heat generator (2) to the heat consumer (3) by means of at least one pump (4),
a second conduit circuit (9) which can be connected to the first (1) and/or a third conduit circuit (21) and includes a storage element (11) and a pump arrangement (10),
a third conduit circuit (21) which can be connected to the first conduit circuit (1) and in which a heat sink (24) is arranged,
wherein further heat generators are coupled into the heat sink (24) via tube coils (25, 28) arranged therein as separators, which heat generators have a temperature that does not correspond to a setpoint temperature in the first conduit circuit (1) and/or which operate with media different from the medium in the first conduit circuit (1) and are hydraulically separated at least with respect to the first conduit circuit (1),
wherein
a heated heating medium can be generated in the first conduit circuit (1) by means of a heat generator (2) and can be supplied to a heat consumer (3) by means of a pump (4),
heated medium can be delivered via the heat sink (24) arranged in the third conduit circuit (21), which heated medium is heated in the heat sink (24) with the tube coils (25, 28) with heat from solar thermal modules and/or from devices that generate waste heat and/or from exhaust gas heat exchangers and/or from other heat sources and can be fed directly into the first conduit circuit (1), is mixed with the medium circulating in the first conduit circuit (1) or replaces said medium at least partially,
**characterized in that**
by means of a control device, a heat balance is prepared from the heat demand of the heat consumer (3), the heat capacity of the heat sink (24) and the storage element (11) and from the heat quantity that can be generated by the heat generator (2),
and a heat demand identified in the heat balance is preferably covered by the heat sink (24) arranged in the third conduit circuit (21), subsequently covered by the storage element (11) and finally covered by the heat generator (2).

2. The heat supply method according to patent claim 1,
**characterized in that**
in the case of a surplus supply of heat quantities from the heat sink (24), the control device directs the calculated surplus into the storage element (11) arranged in the second conduit circuit (9), wherein this is done by means of a pump arrangement (10) arranged in the second conduit circuit (9).

3. The heat supply method according to patent claim 1 or 2,
**characterized in that**
demand for heat quantities arisen in the heat supply system is covered by the heat sink (24), and in the case of undersupply, the demand is additionally covered by the storage element (11),
and in the case of continued undersupply, the demand is covered by the heat exchanger (2).

4. The heat supply method according to patent claim 3,
**characterized in that**
a surplus of heat quantities generated during the operation of the heat generator (2) is supplied to the storage element (11).

5. The heat supply method according to patent claim 3 or 4,
**characterized in that**
the heat sink (24) is additionally heated by a radiator (34) if the temperature falls below a limit temperature.

6. A heat supply system,
composed of at least
a first conduit circuit (1) comprising a heat generator (2) and a heat consumer (3), in which heated medium is transported from the heat generator (2) to the heat consumer (3) by means of at least one pump (4),
a second conduit circuit (9) which can be connected to the first (1) and/or a third conduit circuit (21) and includes a storage element (11) and a pump arrangement (10),
a third conduit circuit (21) which can be connected to the first conduit circuit (1) and in which a heat sink (24) is arranged,
wherein further heat generators are coupled into the heat sink (24) via tube coils (25, 28) arranged therein as separators, which heat generators have a temperature that does not correspond to a setpoint temperature in the first conduit circuit (1) and/or which operate with media different from the medium in the first conduit circuit (1) and are hydraulically separated at least with respect to the first conduit circuit (1),
and a control device,
wherein
a heated heating medium can be generated in the first conduit circuit (1) by means of a heat generator (2) and can be supplied to a heat consumer (3) by means of a pump (4),
heated medium can be delivered via the heat sink (24) arranged in the third conduit circuit (21), which heated medium can be heated in the heat sink (24) with the tube coils (25, 28) with heat from solar thermal modules and/or from devices that generate waste heat and/or from exhaust gas heat exchangers and/or from other heat sources and can be fed directly into the first conduit circuit (1), can be mixed with the medium circulating in the first conduit circuit (1) or can replace said medium at least partially,
**characterized in that**
a heat supply method according to any one of patent claims 1 to 5 is carried out in the heat supply system and
the heat sink (24) is a heat exchanger that has a maximum volume of 100 l.

7. The heat supply system according to patent claim 6,
**characterized in that**
the heat sink (24) has a separator surface of at least 250 cm²/l tank content in relation to one of the tube coils (25) or (28).

8. The heat supply system according to patent claim 6,
**characterized in that**
the heat sink (24) has a separator in the form of a pipe coil with a profiled wall.

9. The heat supply system according to patent claim 8,
**characterized in that**
the separator is a pipe coil made from a corrugated pipe or corrugated hose.

10. The heat supply system according to patent claim 6
**characterized in that**
the first (25) and/or the second tube coil (28) in the heat sink (24) can be connected to a solar thermal module and/or to a heat pump and/or to a combined heat and power plant and/or to a cooling circuit of a device generating waste heat and/or to an exhaust gas heat exchanger and/or to another heat source.

11. The heat supply system according to patent claim 6,
**characterized in that**
the heat sink (24) has a fourth independent conduit circuit in which fresh water is heated in a tube coil (31) of the heat sink (24).

## Revendications

1. Procédé d'apport de chaleur pour un système d'apport de chaleur, composé
d'au moins
un premier circuit de lignes (1) avec un générateur de chaleur (2) et un consommateur de chaleur (3), dans lequel du fluide chauffé est transporté du générateur de chaleur (2) au consommateur de chaleur (3) par au moins une pompe (4),
un deuxième circuit de lignes (9) qui peut être relié au premier (1) et/ou au troisième circuit de lignes (21) et contient un élément de stockage (11) ainsi qu'un agencement de pompe (10),
un troisième circuit de lignes (21) qui peut être relié au premier circuit de lignes (1) et dans lequel un dissipateur thermique (24) est disposé,
sachant que dans le dissipateur thermique (24) sont couplés, en tant que séparateurs, par des serpentins (25, 28) disposés à l'intérieur, des générateurs de chaleur supplémentaires qui ont une température qui ne correspond pas à une température de consigne dans le premier circuit de lignes (1) et/ou qui fonctionnent avec un fluide différent du fluide dans le premier circuit de lignes (1) et sont séparés hydrauliquement au moins par rapport au premier circuit de lignes (1),
sachant
qu'un fluide caloporteur chauffé peut être produit dans le premier circuit de lignes (1) avec un générateur de chaleur (2) et peut être transporté vers un consommateur de chaleur (3) à l'aide d'une pompe (4),
que du fluide chauffé peut être fourni par le biais du dissipateur thermique (24) disposé dans le troisième circuit de lignes (21), qui est chauffé avec de la chaleur provenant de modules solaires thermiques et/ou d'appareils produisant de la chaleur dissipée et/ou d'échangeurs de chaleur de gaz brûlés et/ou d'autres sources de chaleur dans le dissipateur de chaleur (24) avec les serpentins (25, 28) et peut être alimenté directement dans le premier circuit de lignes (1), avec lequel du fluide circulant dans le premier circuit de lignes (1) est mélangé ou remplace au moins partiellement celui-là,
**caractérisé en ce**
**qu'**un bilan thermique est établi à l'aide d'un dispositif de commande à partir du besoin de chaleur du consommateur de chaleur (3), de l'offre de chaleur du dissipateur de chaleur (24), de l'élément de stockage (11) ainsi que de la quantité de chaleur pouvant être produite par le générateur de chaleur (2)
et un besoin de chaleur issu du bilan thermique est couvert de préférence à partir du dissipateur de chaleur (24) disposé dans le troisième circuit de lignes (21), puis par l'élément de stockage (11) et enfin par le générateur de chaleur (2).

2. Procédé d'apport de chaleur selon la revendication 1,
**caractérisé en ce que**
le dispositif de commande, en cas de surplus de quantités de chaleur offertes par le dissipateur de chaleur (24), dirige l'excédent calculé dans l'élément de stockage (11) disposé dans le deuxième circuit de lignes (9), sachant que cela est effectué avec un agencement de pompe (10) disposé dans le deuxième circuit de lignes (9).

3. Procédé d'apport de chaleur selon la revendication 1 ou 2,
**caractérisé en ce que**
le besoin en quantités de chaleur formé dans le système d'apport de chaleur est couvert par le dissipateur de chaleur (24), en cas de sous-alimentation, il est couvert en plus par l'élément de stockage (11)
et si la sous-alimentation persiste, par le générateur de chaleur (2).

4. Procédé d'apport de chaleur selon la revendication 3
**caractérisé en ce que**
lorsque le générateur de chaleur (2) fonctionne, un excédent de quantités de chaleur produit est dirigé vers l'élément de stockage (11).

5. Procédé d'apport de chaleur selon la revendication 3 ou 4,
**caractérisé en ce que**
le dissipateur de chaleur (24) est chauffé en plus par un corps chauffant (34) en cas de valeur en-deçà d'une température limite.

6. Système d'apport de chaleur, composé
d'au moins
un premier circuit de lignes (1) avec un générateur de chaleur (2) et un consommateur de chaleur (3), dans lequel du fluide chauffé est transporté du générateur de chaleur (2) au consommateur de chaleur (3) avec au moins une pompe (4),
un deuxième circuit de lignes (9) qui peut être relié au premier (1) et/ou au troisième circuit de lignes (21) et contient un élément de stockage (11) ainsi qu'un agencement de pompe (10),
un troisième circuit de lignes (21) qui peut être relié au premier circuit de lignes (1) et dans lequel un dissipateur thermique (24) est disposé,
sachant que dans le dissipateur thermique (24) sont couplés, en tant que séparateurs, par des serpentins (25, 28) disposés à l'intérieur, des générateurs de chaleur supplémentaires qui ont une température qui ne correspond pas à une température de consigne dans le premier circuit de lignes (1) et/ou qui fonctionnent avec un fluide différent du fluide dans le premier circuit de lignes (1) et sont séparés hydrauliquement au moins par rapport au premier circuit de lignes (1),
et d'un dispositif de commande,
sachant
qu'un fluide caloporteur chauffé peut être produit dans le premier circuit de lignes (1) avec un générateur de chaleur (2) et peut être transporté vers un consommateur de chaleur (3) à l'aide d'une pompe (4),
du fluide chauffé peut être fourni par le biais du dissipateur thermique (24) disposé dans le troisième circuit de lignes (21), qui peut être chauffé avec de la chaleur provenant de modules solaires thermiques et/ou d'appareils produisant de la chaleur dissipée et/ou d'échangeurs de chaleur de gaz brûlés et/ou d'autres sources de chaleur dans le dissipateur de chaleur (24) avec les serpentins (25, 28) et peut être alimenté directement dans le premier circuit de lignes (1), avec lequel du fluide circulant dans le premier circuit de lignes (1) peut être mélangé ou peut remplacer au moins partiellement celui-là,
**caractérisé en ce**
**qu'**un procédé d'apport de chaleur selon l'une des revendications 1 à 5 est exécuté dans le système d'apport de chaleur et
le dissipateur de chaleur (24) est un échangeur de chaleur qui a un volume maximal de 100 l.

7. Système d'apport de chaleur selon la revendication 6,
**caractérisé en ce que**
le dissipateur de chaleur (24) a une surface de séparateur d'au moins 250 cm²/l de contenu de récipient, rapporté à un des serpentins (25) ou (28).

8. Système d'apport de chaleur selon la revendication 6,
**caractérisé en ce que**
le dissipateur de chaleur (24) présente un séparateur sous forme de spirale à ligne tubulaire avec une paroi profilée.

9. Système d'apport de chaleur selon la revendication 8,
**caractérisé en ce que**
le séparateur est un serpentin à ligne tubulaire en tube ondulé ou flexible ondulé.

10. Système d'apport de chaleur selon la revendication 6,
**caractérisé en ce que**
le premier (25) et/ou le second serpentin (28) dans le dissipateur de chaleur (24) peu(ven)t être raccordé(s) à un module thermique solaire et/ou à une pompe à chaleur et/ou à une centrale de cogénération et/ou à un circuit de refroidissement d'un appareil produisant des gaz dissipés et/ou à un échangeur de chaleur de gaz brûlés et/ou à une autre source de chaleur.

11. Système d'apport de chaleur selon la revendication 6,
**caractérisé en ce que**
le dissipateur de chaleur (24) présente un quatrième circuit de lignes indépendant dans lequel de l'eau douce est chauffée dans un serpentin (31) du dissipateur de chaleur (24).
